## Europäisches Patentamt
## European Patent Office
## Office européen des brevets

(11) Publication number: **0 117 432**
**B1**

(12) **EUROPEAN PATENT SPECIFICATION**

(45) Date of publication of patent specification: **09.09.87**  (51) Int. Cl.⁴: **G 06 F 13/26**

(21) Application number: **84100767.7**

(22) Date of filing: **21.01.84**

(54) **Enhanced reliability interrupt control apparatus.**

(30) Priority: **31.01.83 IT 1934783**

(43) Date of publication of application:
**05.09.84 Bulletin 84/36**

(45) Publication of the grant of the patent:
**09.09.87 Bulletin 87/37**

(84) Designated Contracting States:
**DE FR GB**

(56) References cited:
**DE-A-2 539 821**
**DE-B-2 654 247**
**US-A-3 534 339**
**US-A-4 001 784**
**US-A-4 034 349**

**PATENTS ABSTRACTS OF JAPAN, vol. 6, no.
129 (P-128)1007r, 15th July 1982**

(73) Proprietor: **HONEYWELL INFORMATION
SYSTEMS ITALIA S.p.A.
Via Martiri d'Italia 10
I-10014 Caluso (Torino) (IT)**

(72) Inventor: **Casamatta, Angelo
Via Mantegna, 4
I-20010 - Cornaredo (MI) (IT)**
Inventor: **Fossati, Walter
Via Confalonieri, 41
I-20053 - Muggio' (MI) (IT)**

Courier Press, Leamington Spa, England.

## Description

The present invention relates to an enhanced reliability interrupt control apparatus in a data processing system.

Data processing systems basically include a central processor, a working memory and a plurality of peripheral units which are connected, either individually or in groups, to the central processor by means of suitable control interface units.

The information transfer between central processor and peripheral units can take place according to several methods. But, generally, when such transfer is required by the peripheral units, the most used method is the so-called "interrupt" one.

According to the interrupt method, each peripheral unit which wants to exchange information with the central processor, sends to this last a signal indicative of an interruption request or, more simply, interruption.

Following an interruption, the central processor may interrupt the execution of the program in progress and devote itself to the service required by the interrupting peripheral unit.

It is to be noted that several interruptions may be sent at the same time to the central processor by the several peripheral units; obviously the central processor is able to consider only one interruption at a time.

It is therefore necessary to assign some priority criteria, that is to define which among several contemporaneous interruptions has to be at first considered.

Besides it is to be noted that the interruption requests are sent to the processor in a completely asynchronous way.

It is therefore necessary that the central processor be provided with a synchronization device which allows it to consider the most prioritary interruption at a prefixed time of its cycle.

Among the several solutions used to solve the above problems, as for instance the polling method or the cascade reciprocal conditioning method of the several interruptions (nevertheless such mentioned methods present specific inconveniences), the most often used interruption control apparatuses comprises a latching register and an encoding network.

Every peripheral unit is provided with a connection lead which allows to transfer the interruption as a logical electrical signal at prefixed level to a corresponding input of the latching register. The latching register is cyclically enabled by a clock signal generated by the central processor and loads into its cells all the possible interruptions which are present when such clock signal occurs. The latching register outputs are connected to a logic network which orders according to a predetermined priority all the interruptions received on input and transfers to output only that one with the highest priority among the possible interruptions present at the same time. If that is the case, the interruption transferred to output by the interrupt control apparatus is presented and used by the central processor in coded form.

Obviously the outputs of the interruption control apparatus have to be enabled with some delay after the time defined by the clock signal which latches into the register the possible interruptions. This is necessary for allowing the signals to propagate inside the logic network as far as the output and for having a stable state of the output signals.

Interrupt control apparatuses of such kind are described for instance in U.S. Patents N. 3,534,339 and N. 4,001,784. But such apparatuses have some inconveniences.

First of all, the latching register must have a number of cells equal to the number of leads used for transferring separate interruption signals, that is at least equal to the number of peripheral units. Besides, if the peripheral units may send interruption signals of different types on separate leads, the number of register cells has to be increased.

It follows that, in case of a great number of peripheral units, the latching register must have a large capacity and thus expensive. Now integrated circuits are available on the market which work as registers with capacity of 4 or 8 bits.

Yet the 8-bit registers are not provided with a reset input which is essential because, during the initializing phase of the system, of which the interruption control apparatus is part, a reset command must be able to set such apparatus in an initial known state.

This involves that either the designer uses 4-bit registers or, if 8-bit registers are chosen, he carries out by means of additional logic elements an initializing reset circuit.

These disadvantages are overcome by US—A—4 034 349 which discloses an interrupt control apparatus where interruption signals are first provided in input to a priority encoder which produces a code corresponding to the highest priority interrupt request among the ones being concurrently received.

This code is then latched in a register on the occurrence of a clock signal. The register is provided with a reset input for initialization purpose. Since a binary code of n bit represents $2^n$ distinct information, if the interruption to be latched are $2^n$, a register of n cells is sufficient.

However a further inconvenient of the interrupt control apparatuses of the prior art, including the above mentioned US—A—4 034 349 is that at the same time when the strobe signal latches interruptions into the register, noise pulses may be present on some interruptions leads.

A noise pulse, if latched, is interpreted as interruption signal and may cause an erroneous working of the central processor.

This inconvenient is overcome by the interrupt control apparatus of the invention.

The apparatus of the invention comprises a priority logic network receiving on its inputs the signals present on the interruption leads. Such network provides on its outputs a binary code representative of the most prioritary interruption among the ones present on its inputs at the same time.

This binary code is latched by means of a synchronization signal into an interruption register connected to the outputs of the priority logic network.

According to the invention, as claimed in claim 1 the interrupt control apparatus further comprises a selection circuit for the code latched in the latching register. Such selection circuit controls that the latched interruption code really corresponds to an interruption present on an input of the priority encoding network and it has not been generated by a spurious transient signal due to input noise or to transient states of the priority encoding network. The selection circuit is carried out in an inexpensive and simple way by a multiplexer which receives on its data inputs the interruptions and on its selection inputs the interruption code latched into the latching register.

The multiplexer provides on its output a signal at logical level equal to that one present on its selected input.

If the selected interruption signal is actually active, it is transferred to the multiplexer output and sets a validated interruption flip-flop.

In other words, an interruption code depending on the electric state of the interruption leads is loaded at a prefixed time into the latching register; the selection circuit verifies the presence of the selected interruption at a subsequent time.

These and other features will appear clearer from the following description of a preferred embodiment of the invention and from the enclosed drawings where:

Fig. 1 is a simplified block diagram of a data processing system;

Fig. 2 shows, diagrammatically, the signals exchanged in the system of Fig. 1 between the central processor and the interrupt control apparatus of the present invention;

Fig. 3 shows in timing diagram some signals sent by the central processor to the interrupt control apparatus of the present invention;

Fig. 4 shows a preferred embodiment of the interrupt control apparatus according to the present invention.

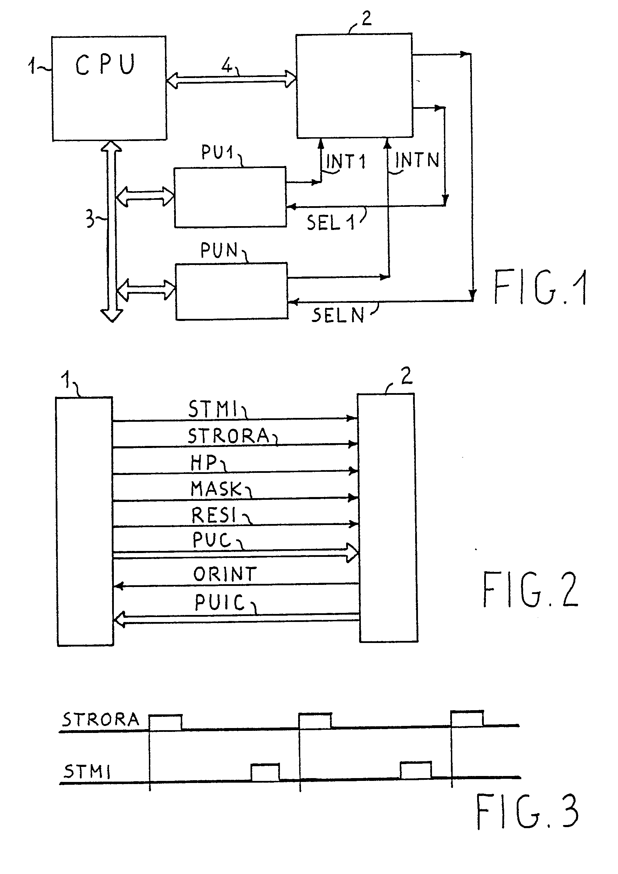

Fig. 1 shows in a simplified block diagram the organization of a data processing system.

The system includes a central processor 1, a plurality of peripheral units PU1, PUN and an interrupt control apparatus 2.

Even if apparatus 2 is shown as a separate block, it may be integral to central processor 1.

Each of the peripheral units and the central processor communicate with each other through a bus 3.

The information exchange through bus 3 takes place between processor 1 and a single peripheral unit at a time.

If an information exchange is not in progress on bus 3, central processor 1 may select a peripheral unit and start an information exchange with it.

Similarly a peripheral unit may send an interruption and require the bus access for exchanging information with the central processor. If the interruption is accepted, the central processor selects the interrupting peripheral unit.

The selection of the peripheral units as well as the acknowledgement of the interruptions is performed by interrupt control apparatus 2. Apparatus 2 is connected to each of peripheral units PU1, PUN through a lead INT1, INTN respectively on which each peripheral unit transmits a related interruption signal.

Apparatus 2 is further connected to each of peripheral units PU1, PUN through a lead SEL1, SELN respectively on which the interrupt control apparatus transmits to each peripheral unit a related selection signal. Processor 1 and apparatus 2 communicate each other through a channel 4. The information exchanged through channel 4 are shown in Fig. 2. Central processor 1 sends to apparatus 2 the timing signals STMI, STRORA and:

a signal HP indicating, when active, that it is executing operations at high level and cannot be interrupted;

a command MASK by means of which it orders to interrupt control apparatus 2 not to consider the interruptions, that is to mask them;

a suitable reset command RESI;

a code PUC of peripheral unit selection.

Apparatus 2 sends to central processor 1 a general interruption signal ORINT and a code PUIC indicative of the interrupting peripheral unit. Fig. 3 shows in timing diagram signals STRORA and STMI.

Signal STRORA is a cyclical timing pulse which defines with its rising edge the start of a machine cycle of the central processor.

Signal STMI is a cyclical timing pulse which rises to logical level 1 during each machine cycle.

The function of signals STRORA and STMI in the interrupt control apparatus will be seen later on.

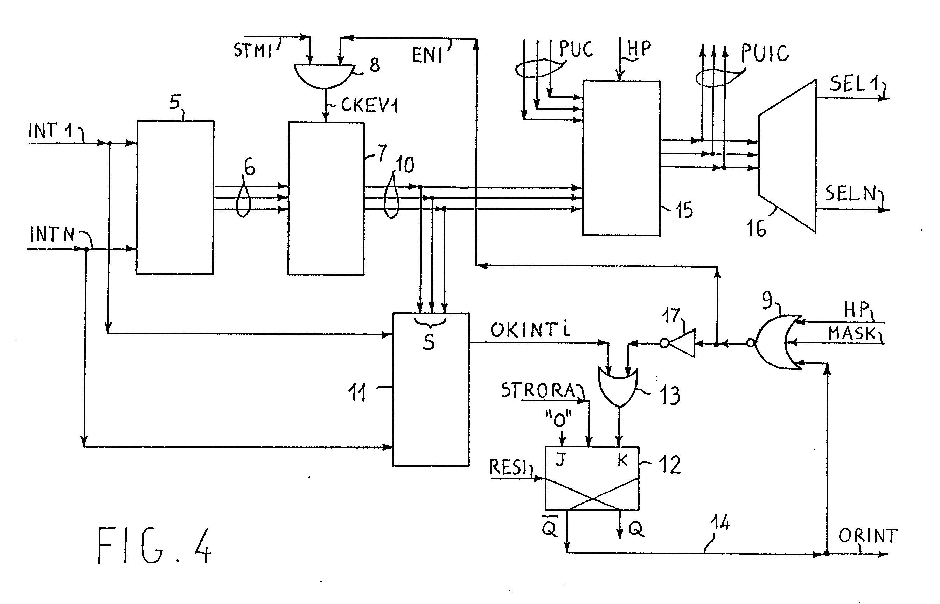

Fig. 4 shows schematically interrupt control apparatus 2 according to the present invention.

First of all, apparatus 2 comprises a priority encoding network 5 which asynchronously receives on its inputs interruption signals INT1, INTN coming from the several peripheral units.

For instance, each of such signals is inactive if at logical level 1 and representative of an interruption if at logical level 0. Encoding network 5 assigns a relative priority to the several interruption signals received on its inputs (for instance a relative priority increasing according to the order number from INT1 to INTN) and provides on an output set 6 a code representative of the most prioritary interruption present on its inputs.

Encoding network 5 is a combinatorial logic network and has no latching function.

Therefore it evolves in asynchronous way as the asynchronous events which occur on its inputs.

Outputs of network 5 are connected to the inputs of a latching register 7 which loads into its cells the information present on its inputs with the rising edge of a clock signal CKEV1.

Clock input of register 7 is connected to the output of a two-input AND gate 8 which respectively receives on its inputs timing signal STMI and a signal ENI present on the output of a three input NOR gate 9.

NOR gate 9 respectively receives on its inputs signal HP, signal MASK and signal ORINT generated by the interrupt control apparatus, as it will be seen later on.

Even if only one of such signals is at logical level 1, signal ENI is at logical level 0 and AND gate 8 is disabled.

In other words signal CKEV1 goes to logical level 1 with signal STMI only if signals HP, MASK, ORINT are at logical level 0.

Outputs 10 of register 7 are connected to selection inputs S of a multiplexer 11, whose inputs are coupled to interruption leads INT1, INTN. The code present on outputs 10 is then used as multiplexer selection code.

If such code is indicative of an interruption signal on lead INTi, the signal present on lead INTi is transferred to the output of multiplexer 11.

If signal OKINTi on multiplexer output is at logical level 0, this means that interruption INTi is really present also after the loading of the related code into register 7.

Signal OKINTi at logical level 0 therefore validates interruption INTi and secures that the content of register 7 is not the result of transient signals present on register inputs but of an interruption INTi present on the inputs of the interrupt control apparatus at least throughout the propagation time across the logic chain (network 5, register 7, multiplexer 11).

On the contrary, signal OKINTi at logical level 1 indicates that the code latched into register 7 is not indicative of a really present interruption.

Register 7 therefore contains an erroneous interruption code due to noise pulses on the interruption leads or to a logical switching in progress inside network 5 when register 7 was loaded.

Any uncertainty about the validity of the code loaded into register 7 is therefore removed by considering signal OKINTi.

Output of multiplexer 11 is connected to K input of a J—K flip-flop 12 through an OR gate 13.

Flip-flop 12 receives on its J input a signal permanently at logical level 0 and on its clock input signal STRORA.

When a signal at logical level 0 is present on K input of flip-flop 12, outputs Q and $\bar{Q}$ toggle with the rising edge of STRORA.

If a signal at logical level 0 is present on K input, flip-flop 12 does not change its state.

The rest state of flip-flop 12 is the set state.

Flip-flop 12 is set in rest state by signal RESI at logical level 0 which is applied to set input and set in active state (or reset) by signal STRORA if input K is at logical level 0.

Output $\bar{Q}$ is connected to lead 14 on which signal ORINT is present. Such signal, when at logical level 1, indicates to central processor 1 that a validated interruption code is present into register 7. As already said, signal ORINT is further applied to an input of NOR gate 9.

Output of NOR gate 9 is connected, besides to an input of AND gate 8, to a second input of OR gate 13 too through a NOT 17.

In other words flip-flop 12 is reset only if the same conditions enabling the loading of register 7 are verified.

The interrupt control apparatus of the invention further includes a multiplexer 15 and a decoder 16.

Multiplexer 15 receives on a first input set from the central processor code PUC indicative of the peripheral to be selected.

Besides it receives on a second input set the interruption code present on outputs of register 7.

Signal HP provided by central processor 1 is applied to selection input of multiplexer 15.

When signal HP is at logical level 0, code PUC present of first input of multiplexer 15 is transferred to output set of it.

When signal HP is at logical level 1 the code present on second input set of multiplexer 15 is transferred to output set of it.

Output set of multiplexer 15 is further connected to input set of decoder 16 which decodes the input code in a selection signal SELi at suitable logical level (for instance logical level 0) on one of N leads SEL1, SELN of peripheral unit selection.

The working of the interrupt control apparatus is very simple.

Let us suppose at first that no peripheral unit have interruption requests in progress (signals INT1, INTN at logical level 1).

Signal ORINT sent to central processor 1 by apparatus 2 is therefore at logical level 0.

If central processor 1, during a machine cycle, wants to start a dialogue with a prefixed peripheral unit, it sends to apparatus 2 at the beginning of the machine cycle signal MASK at logical level 1 and, at the same time, puts on channel 4 code PUC of peripheral unit identification.

Code PUC is decoded by decoder 16 and a corresponding signal of peripheral unit selection is generated.

A dialogue between central processor and peripheral unit can therefore start.

It takes place through bus 3 and generally lasts for several processor cycles.

During such cycles, apparatus 2 is inhibited from receiving any interruption, that is the loading of register 7 and the activation of flip-flop 12 are inhibited.

At the beginning of the last dialogue cycle, signal MASK is led to logical level 0, so that during such last cycle STMI enables the loading of register 7.

The most prioritary one of the possible pending interruptions is loaded in coded form into register 7.

Such interruption is validated as to its code and, at the beginning of the successive cycle (signal STRORA, cycle 1), flip-flop 12 is reset and signal ORINT is sent to central processor 1.

During such cycle (cycle 1) the central processor tests signal ORINT. At the same time signal ORINT inhibits any change of the content of register 7 in consequence of signal STMI.

Central processor 1, owing to the acknowledgement of signal ORINT at logical level 1, generate signal HP, that is it gets ready to perform the received interruption at a predetermined priority level.

Signal HP at logical level 1 allows to transfer on channel 4 as code PUIC the code loaded into register 7; at the same time such code is decoded in a command of peripheral unit selection.

During the subsequent machine cycles, the required dialogue between central processor and peripheral unit takes place.

During such dialogue the peripheral unit, which is served, further leads to logical level 1 its signal INTi.

At the beginning of the last cycle of such dialogue, central processor sends a pulse RESI which inactivates (that is set) flip-flop 12 and besides lowers signal HP at logical level 0.

The acknowledgement of a new interruption signal is therefore enabled. Possible spurious interruption signals, which are not validated by the interrupt control apparatus, do not cause the switching of flip-flop 12 and are therefore neglected.

In case the peripheral units are at the maximum 8, the apparatus of Fig. 4 may be easily carried out with integrated circuits.

For instance encoding network 5 may be constituted by the TTL integrated circuit marketed by several manufacturers with code 74LS148. Register 7 may be constituted by the integrated circuit with code 74LS195A.

Multiplexer 11 may be constituted by the integrated circuit with code 74LS251.

Multiplexer 15 may be constituted by the integrated circuit with code 74LS257.

Decoder 16 may be constituted by the integrated circuit with code 74LS138.

In case the number of system peripheral units is greater than 8, the apparatus of Fig. 4 may be still easily carried out with the above mentioned circuits suitably put in parallel to achieve the required parallelism and with the addition of few logic elements, as it is evident to the people skilled in the art.

## Claims

1. Interrupt control apparatus controlled by a central processor for acknowledging on command from a central processor on priority basis and validating one among several possible asynchronous interruptions (INT1, INTN) and for sending to said central processor a binary code corresponding to the validated interruption comprising:

a priority encoding network (5) receiving on its inputs said interruptions and providing on its output a code representative of the most prioritary interruption among those present at the same time on its inputs,

a latching register (7) receiving on its inputs said code, said register being cyclically enabled to load said code, by a timing control signal (CKEV1) received from said central processor, characterized in that it comprises:

a selection circuit (11) receiving on its data inputs said interruptions and on its selection inputs said code from said register, said selection circuit being commanded by said code from said register to select that one among said interruptions which is represented by said code, said selection circuit providing on its output a validation/invalidation signal at a first logical level when said selected interruption is really present and validated, and at a second logical level when said selected interruption is not present and invalidated, said signal providing a validation/invalidation information to said central processor.

2. Interruption control apparatus of claim 1 further comprising a flip-flop (12) to latch said validation/invalidation signal, said flip-flop being cyclically activated by a control signal having a predetermined time delay with respect to said timing control signal (CKEV1).

3. Interrupt control apparatus of claim 2 further comprising circuit means (8, 9, 17, 13) to inhibit the cyclical enabling of said register and said flip-flop when said flip-flop is in a first state.

## Patentansprüche

1. Von einem Zentralprozessor gesteuertes Unterbrechungssteuergerät zum prioritätsabhängigen Bestätigen eines Befehls des Zentralprozessors zur Gültigkeitsprüfung einer von mehreren möglichen asynchron auftretenden Unterbrechungsanforderungen (INT1, INTN) sowie zum Aussenden eines der gültigkeitsgeprüften Unterbrechungsanforderung entsprechenden Binärcodes an den Zentralprozessor, mit

a) einer Prioritätscodierschaltung (5), die an ihren Eingängen die genannten Unterbrechungsanforderungen empfängt und an ihrem Ausgang einen für diejenige Unterbrechungsanforderung kennzeichnenden Code abgibt, die unter den gleichzeitig an den Eingängen anstehenden Unterbrechungsanforderungen die höchste Priorität hat;

b) einem an seinen Eingängen den genannten Code empfangenden Verriegelungsregister (7), welches durch ein vom Zentralprozessor geliefertes Zeitgabesteuersignal (CKEV1) zyklisch zum Laden des Codes aktiviert wird; dadurch gekennzeichnet, daß

c) ein Auswahlschaltkreis (11) vorgesehen ist, der an seinen Dateneingängen die genannten Unterbrechungsanforderungen und an seinen Auswahleingängen den Code vom Register empfängt;

d) der Auswahlschaltkreis durch den Code vom Register den Befehl erhält, diejenige der Unterbrechungsanforderungen auszuwählen, welche durch den Code gekennzeichnet ist;

e) der Auswahlschaltkreis an seinem Ausgang ein Gültig/Ungültig-Signal mit einem ersten logischen Pegel liefert, wenn die ausgewählte Unterbrechungsanforderung tatsächlich vorhanden und gültig ist, und das Signal mit einem zweiten logischen Pegel liefert, wenn die ausgewählte Unterbrechungsanforderung nicht ansteht und ungültig ist;

f) das Gültig/Ungültig-Signal eine Gültig/Ungültig-Information an den Zentralprozessor gibt.

2. Unterbrechungssteuergerät nach Anspruch 1, welches weiterhin ein Flip-Flop (12) zum Verriegeln des Gültig/Ungültig-Signals aufweist, wobei dieses Flip-Flop durch ein Steuersignal zyklisch aktiviert wird, welches gegenüber dem Zeitgabesteuersignal (CKEV1) um eine vorgegebene Zeitspanne zeitverzögert ist.

3. Unterbrechungssteuergerät nach Anspruch 2, das ferner eine Schaltung (8, 9, 17, 13) zum Sperren der zyklischen Aktivierung des Registers und des Flip-Flops enthält, wenn sich das Flip-Flop in einem ersten Schaltzustand befindet.

**Revendications**

1. Appareil de commande d'interruption commandé par un processeur central pour prendre en compte, sur commande d'un processeur central sur une base de priorité, et pour valider une interruption parmi plusieurs interruptions asynchrones possibles (INT1, INTN) et pour envoyer audit processeur central un code binaire correspondant à l'interruption validée comprenant:

un réseau de codage de priorité (5) qui reçoit sur ses entrées lesdites interruptions et qui délivre sur ses sorties un code représentatif de l'interruption la plus prioritaire parmi celles présentes en même temps sur ses entrées,

un registre de verrouillage (7) qui reçoit sur ses entrées ledit code, ce registre étant autorisé de façon cyclique à charger ledit code par un signal de commande de synchronisation (CKEV1) reçu dudit processeur central, caractérisé en ce qu'il comprend:

un circuit de sélection (11) qui reçoit sur ses entrées de données lesdites interruptions et sur ses entrées de sélection ledit code dudit registre, ledit circuit de sélection étant commandé par ledit code dudit registre pour sélectionner l'interruption, parmi lesdites interruptions, qui est représentée par ledit code, ledit circuit de sélection délivrant sur sa sortie un signal de validation/invalidation à un premier niveau logique lorsque ladite interruption sélectionnée est réellement présente et validée, et à un second niveau logique lorsque ladite interruption sélectionnée n'est pas présente et est invalidée, ledit signal délivrant une information de validation/invalidation audit processeur central.

2. Appareil de commande d'interruption selon la revendication 1 comprenant en outre une bascule (12) pour verrouiller ledit signal de validation/invalidation, ladite bascule étant activée de façon cyclique par un signal de commande ayant un retard prédéterminé par rapport audit signal de commande de synchronisation (CKEV1).

3. Appareil de commande d'interruption selon la revendication 2 comprenant de plus des moyens (8, 9, 17, 13) pour neutraliser la validation cyclique dudit registre et de ladite bascule lorsque ladite bascule est dans un premier état.

FIG.1

FIG.2

FIG.3

FIG.4